# EUROPÄISCHE PATENTSCHRIFT

(11) **EP 0 804 997 B1**
(45) Veröffentlichungstag und Bekanntmachung des Hinweises auf die Patenterteilung: **09.06.1999**
(21) Anmeldenummer: 97810262.2
(22) Anmeldetag: 28.04.1997
(51) Int. Cl.: B23Q 11/00

(54) **Einschneidiger Ausdrehkopf mit Unwuchtausgleich**
Single cutting edge boring head with imbalance compensation
Tête à aléser à arête de coupe unique avec compensation du balourd

(30) Priorität: 02.05.1996 CH 110896
(43) Veröffentlichungstag der Anmeldung: 05.11.1997
(73) Patentinhaber: Heinz Kaiser AG, 8153 Rümlang (CH)
(72) Erfinder: Kaiser, Heinz, 8304 Wallisellen (CH); Woerz, Hans, 8156 Oberhasli (CH); Pape, Dieter, 8153 Rümlang (CH)
(74) Vertreter: Groner, Manfred

(56) Entgegenhaltungen:
- EP-A- 0 409 050
- US-A- 4 626 144

## Beschreibung

Die Erfindung betrifft einen einschneidigen Ausdrehkopf mit Unwuchtausgleich, mit einem Werkzeugkörper, in dem ein Werkzeugträger für einen Schneidenhalter radial feinverstellbar gelagert ist, und mit einer Auswuchtvorrichtung, die wenigstens zwei in Umfangsrichtung des Werkzeugkörpers gegenläufig verstellbare Gewichtskörper aufweist, mit einem Einstellring, mit dem die beiden miteinander und mit dem Einstellring verbundenen Gewichtskörper gleichzeitig und gegenläufig zueinander bewegbar sind und mit einem Organ zur gegenläufigen Bewegungsübertragung der beiden Gewichtskörper (siehe US-A-4 626 144).

Solche Ausdrehköpfe werden hauptsächlich zur Bearbeitung eng tolerierter Bohrungen verwendet. Sie sind konstruktionsbedingt nicht rotationssymmetrisch und weisen deshalb eine mehr oder weniger grosse Unwucht auf. Diese Unwucht wirkt sich negativ auf das Vibrationsverhalten der Werkzeuge und damit auf die ausgedrehte Bohrung aus und vermindert die Mass- und Formgenauigkeit sowie die Oberflächengüte. Die Entwicklung zunehmend härterer und warmfester Schneidstoffe und die Forderung nach kürzeren Bearbeitungsabläufen bedingen immer höhere Drehzahlen und damit die Notwendigkeit, eine Unwucht zu vermeiden.

Im Stand der Technik ist durch die DE-C-35 10 259 bzw. US-A-4,626,144 ein Ausdrehkopf der genannten Gattung bekannt geworden, bei dem für den Unwuchtausgleich am Umfang des Werkzeugkopfes zwei Gewichte angebracht sind, die mit einem Seilzug verbunden sind und mit einem mit Skalen versehenen Ring gegenläufig verstellbar sind. Die Gewichte haben die Form von halbkreisförmigen Scheiben, die mittels an diesen besfestigten und über Umlenkbolzen führenden Zugschnüren um einen gemeinsamen Drehpunkt entgegengesetzt verschwenkbar sind. Diese Auswuchtvorrichtung bedingt eine vergleichsweise grosse Bauhöhe und dürfte in der Montage und Wartung aufwendig sein. Weiter sind durch die US-A-5,074,723 und die US-A-5,263,995 Ausdrehköpfe bekannt geworden, die für den Unwuchtausgleich zwei unabhängig voneinander verstellbare jeweils als Ringe ausgebildete Gewichte ausweisen. Auch hier bedingen die übereinander angeordneten Ringe eine vergleichsweise grosse Bauhöhe. Die EP-A-0 409 050 zeigt einen Antrieb für eine Schleifscheibe, die zwei einen Viertelkreis bildende Auswuchtgewichte aufweist. Diese Gewichte sind sehr aufwendig und einzeln mit Motoren und Getrieben verstellbar.

Schliesslich zeigt die DE-C-42 42 063 ein Ausdrehwerkzeug, bei dem ein Gewicht abhängig von der Durchmesserverstellung automatisch mittels eines Hebels verstellt wird. Bei einem Ausdrehkopf, der mit unterschiedlich schweren Schneidenträgern zum Einsatz kommen soll, eignet sich ein automatischer Unwuchtausgleich nicht.

Der Erfindung liegt die Aufgabe zugrunde, einen Ausdrehkopf der genannten Art zu schaffen, der bei geringer Bauhöhe und möglichst einfacher Handhabung anhand einer Skala einen Unwuchtausgleich ermöglicht und der dennoch kostengünstig herstellbar ist.

Die Aufgabe ist beim gattungsgemässen Ausdrehkopf gemäss Anspruch 1 gelöst. Beim erfindungsgemässen Ausdrehkopf sind die Gewichtskörper nicht übereinander, sondern nebeneinander in der gleichen Ebene angeordnet. Da die Gewichtskörper lediglich einen Viertel eines Kreisringes bilden, können sie bezüglich der Längsachse des Ausdrehkopfes von der einen Seite auf die andere Seite bewegt werden, was einen vergleichsweise grossen Verschiebeweg des Schwerpunktes ergibt. Gegenüber dem Stand der Technik kann damit mit kleinerem Gewicht eine grosse Unwucht ausgeglichen werden.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
Figur 1 eine Ansicht eines erfindungsgemässen Ausdrehkopfes,
Figur 2 einen Längsschnitt durch den Ausdrehkopf gemäss Figur 1,
Figuren 3 und 4 Schnitte entlang der Linie III-III der Figur 2, und
Figuren 5a und 5b schematisch die beiden Gewichtskörper in entgegengesetzten Stellungen.

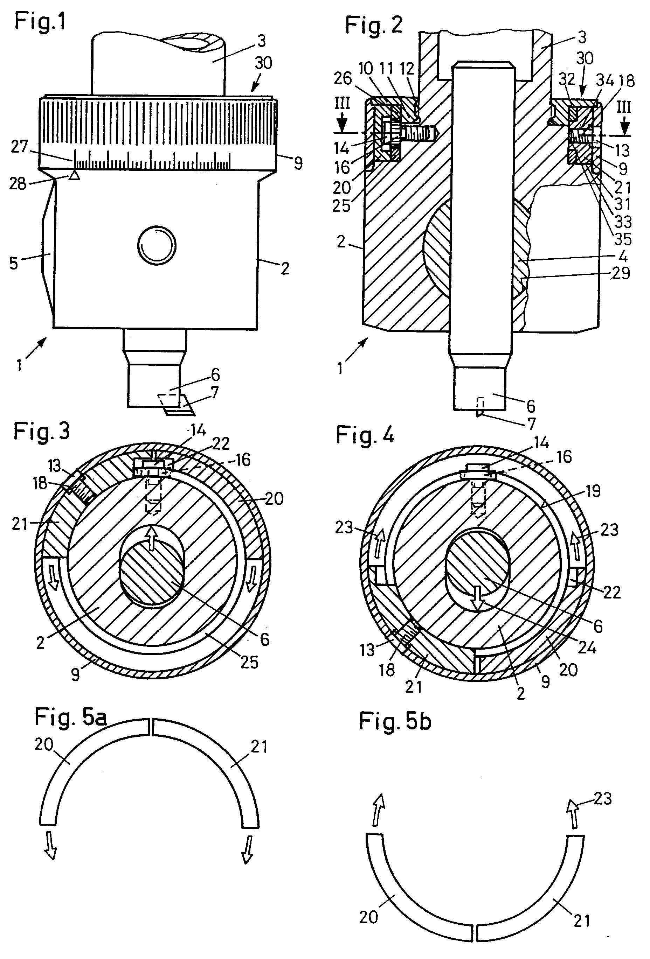

Der in den Figuren 1 und 2 gezeigte Ausdrehkopf 1 besitzt einen Werkzeugkörper 2, an dem ein zylindrischer Befestigungszapfen 3 angeordnet ist. Ein Schneidplattenhalter 6 mit einer Schneidplatte 7 ist in bekannter Weise mit hier nicht gezeigten Klemmschrauben in einem Werkzeugträger 4 eingespannt. Der Werkzeugträger 4 ist in eine Querbohrung 29 des Werkzeugkörpers 2 eingesetzt und wird durch Drehen einer Skalenschraube 5 zur Einstellung des Ausdrehdurchmessers radial verstellt. Durch eine radiale Verstellung des Schneidplattenhalters 6 und der daran angebrachten Schneidplatte 7 wird entsprechend der Schwerpunkt des Ausdrehkopfes quer zur Längsachse verschoben. Die Figuren 3 und 4 zeigen die beiden Endpositionen des Schneidplattenhalters 6. Zwischen diesen Positionen ist der Schneidplattenhalter 6 in Richtung der Pfeile 24 stufenlos verstellbar.

Um eine Unwucht am Ausdrehkopf 1 auszugleichen, ist am Ansatz des Befestigungszapfens 3 eine Auswuchtvorrichung 30 angebracht, die einen Einstellring 9 aufweist, der an einem Haltering 10 sowie einer Schulter 31 des Werkzeugkörpers 2 drehbar gelagert ist und an dem mittels einer Klemmschraube 13 ein Gewichtskörper 21 befestigt ist.

Der Haltering 10 weist einen nach innen ragenden Gewindeflansch 11 auf und ist auf ein Gewinde 12 am Ansatz des Befestigungszapfens 3 aufgeschraubt. Der Haltering 10 und der Einstellring 9 bilden mit einer stufenförmigen Andrehung 33 des Werkzeugkörpers 2 einen ringförmigen Kanal 32, in dem der Gewichtskörper 21 sowie ein zweiter Gewichtskörper 20 gegenläufig bewegbar gelagert sind.

Die Figuren 5a und 5b zeigen die beiden Endpositionen, zwischen denen die Gewichtskörper 20 und 21 stufenlos und gegenläufig bewegbar sind.

Damit die beiden Gewichte 20 und 21 beim Drehen des Einstellrings 9 genau gegenläufig bewegt werden, ist innenseitig am Gewichtskörper 20 ein umlaufender Zahnring 26 und am Gewichtskörper 21 ein Zahnring 25 befestigt, die mit einem Zahnritzel 16 kämmen, das mittels einer Schraube 14 am Werkzeugkörper 2 drehbar gelagert ist. Die beiden Gewichtskörper 20 und 21 sind somit über eine Stirnverzahnung miteinander verbunden, derart, dass bei einer Bewegung des Gewichtskörpers 21 mittels des Einstellringes 9 der zweit Gewichtskörper 20 selbsttägig gegenläufig bewegt wird. Die optimale Einstellung der beiden Gewichtskörper 20 und 21 wird beispielsweise anhand einer Tabelle ermittelt, die den Ausdrehdurchmesser und das Gewicht des Schneidenplattenhalters 6 berücksichtigt. Der entnommene Wert wird an einer Skala 27 des Einstellringes 9 bezüglich einer festen Markierung 28 des Werkzeugkörpers 2 eingestellt. Zum Festlegen der eingestellten Gewichtskörper 20 und 21 wird die Klemmschraube 13 in der Gewindebohrung 34 des Gewichtskörpers 21 weiter eingedreht und gegen die Aussenseite des Werkzeugkörpers 2 geklemmt.

Die beiden Gewichtskörper 20 und 21 bilden jeweils einen Viertel eines Kreisringes und können in den beiden Endpositionen zu einem halben Kreisring aneinandergefügt werden. Damit die in Figur 3 gezeigte Endposition möglich ist, sind an den Ringen 20 und 21 Ausnehmungen 22 angebracht, welche in der genannten Position das Zahnritzel 16 und den Kopf der Schraube 14 aufnehmen. Die beiden Endpositionen sind damit weitgehend symmetrisch zueinander und der Verschiebeweg zwischen diesen Endpositionen ist symmetrisch zur Längsachse des Ausdrehkopfes und vergleichsweise gross.

Die Auswuchtvorrichtung 30 besteht ersichtlich aus vergleichsweise wenigen und robusten Einzelteilen und kann sehr einfach montiert und gewartet werden.

## Patentansprüche

1. Einschneidiger Ausdrehkopf mit Unwuchtausgleich, mit einem Werkzeugkörper (2), in dem ein Werkzeugträger (4) für einen Schneidplattenhalter (6) radial feinverstellbar gelagert ist, mit einer Auswuchtvorrichtung (30), die wenigstens zwei in Umfangsrichtung des Werkzeugkörpers (2) gegenläufig verstellbare Gewichtskörper (20, 21) aufweist, mit einem Einstellring (9), mit dem die beiden miteinander und mit dem Einstellring (9) verbundenen Gewichtskörper (20, 21) gleichzeitig und gegenläufig zueinander bewegbar sind und mit einem Organ (16) zur gegenläufigen Bewegungsübertragung der beiden Gewichtskörper, dadurch gekennzeichnet, dass die beiden Gewichtskörper (20, 21) jeweils höchstens etwa einen Viertel eines Kreisringes bilden und im wesentlichen in der gleichen Ebene bewegbar sind, und dass die beiden Gewichtskörper (20, 21) für eine gegenläufige Bewegungsübertragung über eine Verzahnung (16, 25, 26) miteinander in Eingriff sind.

2. Ausdrehkopf nach Anspruch 1, dadurch gekennzeichnet, dass zur gegenläufigen Bewegungsübertragung der beiden Gewichtskörper (20, 21) am Werkzeugkörper (2) ein entsprechendes Organ (16) gelagert ist.

3. Ausdrehkopf nach Anspruch 1 oder 2, dadurch gekennzeichnet, dass zur gegenläufigen Bewegungsübertragung der beiden Gewichtskörper (20, 21) diese Körper jeweils mit einem ein Zahnung aufweisenden Ring (25, 26) versehen sind, wobei dieser Ring (25, 26) mit einem auf dem Werkzeugträger (4) drehbar gelagerten Zahnritzel (16) in Eingriff sind.

4. Ausdrehkopf nach einem der Ansprüche 1 bis 3, dadurch gekennzeichnet, dass die beiden Gewichtskörper (20, 21) zwischen zwei Stellungen bewegbar sind, in denen diese jeweils einen halben Kreisring bilden.

5. Ausdrehkopf nach einem der Ansprüche 1 bis 4, gekennzeichnet durch einen Haltering (10), der auf ein Aussengewinde (12) des Werkzeugkörpers (2) aufgeschraubt ist und der einen inneren Gewindeflansch (11) aufweist und mit einem Einstellring (9) einen umlaufenden Kanal (32) für die Lagerung der Gewichtskörper (20, 21) bildet.

6. Ausdrehkopf nach einem der Ansprüche 1 bis 5, gekennzeichnet durch eine Klemmschraube (13), welche einen Haltering (10) und einen der beiden Gewichtskörper (20, 21) radial durchgreift und der zur Festlegung der Gewichtskörper (20, 21) gegen eine Aussenseite (19) des Werkzeugkörpers (2) klemmbar ist.

7. Ausdrehkopf nach einem der Ansprüche 1 bis 7, dadurch gekennzeichnet, dass die beiden Gewichtskörper (20, 21) zwischen zwei bezüglich der Längsachse des Ausdrehkopfes (1) spiegelsymmetrisch ausgebildeten Endlagen verstellbar sind.

## Claims

1. Single-edged boring head with imbalance compensation, comprising a tool body (2) in which a tool carrier (4) for a tool bit holder (6) is radially finely adjustably mounted, an imbalance device (30) having at least two weight bodies (20, 21) adjustable in opposite directions in the circumferential direction of the tool body (2), an adjusting ring (9) by means of which the two weight bodies (20, 21) connected together and to the adjusting ring (9) can be moved relative to one another simultaneously and in opposite directions and an element (16) for transmitting the movement of the two weight bodies in opposite directions, characterised in that the two weight bodies (20, 21) each form at most approximately a quarter of a circular ring and are movable essentially in the same plane, and that the two weight bodies (20, 21) are in engagement with one another via toothing (16, 25, 26) for transmission of the movement in opposite directions.

2. Boring head according to claim 1, characterised in that a corresponding element (16) is mounted on the tool holder (2) for transmission of the movement of the two weight bodies (20, 21) in opposite directions.

3. Boring head according to claim 1 or claim 2, characterised in that the weight bodies (20, 21) are each provided with a ring (25, 26) having toothing for transmission of the movement of these bodies in opposite directions, this ring (25, 26) being in engagement with a pinion (16) rotatably mounted on the tool carrier (4).

4. Boring head according to one of claims 1 to 3, characterised in that the two weight bodies (20, 21) are movable between two positions in which they each form half of a circular ring.

5. Boring head according to one of claims 1 to 4, characterised by a holding ring (10) which is screwed on to an external thread (12) on the tool body (2), has an internal threaded flange (11) and, together with an adjusting ring (9), forms a circumferential channel (32) for the mounting of the weight bodies (20, 21).

6. Boring head according to one of claims 1 to 5, characterised by a clamping screw (13) which radially traverses a holding ring (10) and one of the two weight bodies (20, 21) and can be clamped against an outer face (19) of the tool body (2) in order to fix the weight bodies (20, 21).

7. Boring head according to one of claims 1 to 7, characterised in that the two weight bodies (20, 21) are adjustable between two end positions in mirror symmetry relative to the longitudinal axis of the boring head (1).

## Revendications

1. Tête d'alésage à arête de coupe unique, à compensation de balourd, comprenant un corps d'outil (2) dans lequel un porte-outil (4), destiné à un support (6) de plaque de coupe, est monté avec faculté de réglage précis dans le sens radial ; un dispositif d'équilibrage (30), présentant au moins deux contrepoids (20, 21) déplaçables en sens inverse dans la direction périphérique du corps d'outil (2) ; une bague de réglage (9) à l'aide de laquelle les deux contrepoids (20, 21), reliés l'un à l'autre et à ladite bague de réglage (9), peuvent être déplacés simultanément et en sens inverse l'un de l'autre ; et un organe (16) pour la transmission des mouvements en sens inverse des deux contrepoids, caracterisée par le fait que les deux contrepoids (20, 21) forment à chaque fois, au maximum, approximativement un quart d'un anneau circulaire et sont, pour l'essentiel, mobiles dans le même plan ; et par le fait que les deux contrepoids (20, 21) sont mutuellement en prise par l'intermédiaire d'une denture (16, 25, 26), en vue d'une transmission des mouvements en sens inverse.

2. Tête d'alésage selon la revendication 1, caractérisée par le fait qu'un organe correspondant (16) est monte sur le corps d'outil (2), en vue de la transmission des mouvements en sens inverse des deux contrepoids (20, 21).

3. Tête d'alésage selon la revendication 1 ou 2, caractérisée par le fait que, pour assurer la transmission des mouvements en sens inverse des deux contrepoids (20, 21), ces derniers sont respectivement pourvus d'un anneau (25, 26) présentant une denture, cet anneau (25, 26) étant en prise avec un pignon denté (16) monté à rotation sur le porte-outil (4).

4. Tête d'alésage selon l'une des revendications 1 à 3, caractérisée par le fait que les deux contrepoids (20, 21) sont mobiles entre deux positions dans lesquelles ils forment, à chaque fois, un demi-anneau circulaire.

5. Tête d'alésage selon l'une des revendications 1 à 4, caractérisée par une bague de retenue (10) qui est vissée sur un filetage extérieur (12) du corps d'outil (2), comporte une bride filetée intérieure (11) et forme, avec une bague de réglage (9), un canal circonférentiel (32) en vue du montage des contrepoids (20, 21).

6. Tête d'alésage selon l'une des revendications 1 à 5, caractérisée par une vis de blocage (13) qui traverse radialement une bague de retenue (10) et l'un des deux contrepoids (20, 21), et peut être coincée contre une face externe (19) du corps d'outil (2) en vue d'arrêter lesdits contrepoids (20, 21).

7. Tête d'alésage selon l'une des revendications 1 à 7, caractérisée par le fait que les deux contrepoids (20, 21) sont réglables entre deux positions extrêmes de réalisation spéculaire par rapport à l'axe longitudinal de ladite tête d'alésage (1).
